# EUROPÄISCHE PATENTSCHRIFT

(11) **EP 1 283 789 B1**
(45) Veröffentlichungstag und Bekanntmachung des Hinweises auf die Patenterteilung: **21.07.2004**
(21) Anmeldenummer: 01960216.8
(22) Anmeldetag: 12.05.2001
(51) Int. Cl.: B60R 13/08, B62D 25/16, B62D 25/18

(54) **MEHRSCHICHTIGES FORMTEIL UND HERSTELLUNGSVERFAHREN HIERFÜR**
MULTILAYER MOLDED ELEMENT AND METHOD OF MAKING SAME
PIECE FACONNEE MULTICOUCHE ET PROCEDE POUR SA PRODUCTION

(30) Priorität: 21.05.2000 DE 10024496
(43) Veröffentlichungstag der Anmeldung: 19.02.2003
(73) Patentinhaber: CWW-GERKO Akustik GmbH, 67547 Worms (DE)
(72) Erfinder: FREIST, Christoph, 33619 Bielefeld (DE); EICHHORN, Georg, 32049 Herford (DE); SEIFERT, Meinolf, 33184 Altenbeken (DE); DOPHEIDE, Ralf, 33649 Bielefeld (DE)
(74) Vertreter: Leineweber, Jürgen, Dipl.-Phys.
(86) Internationale Anmeldenummer: PCT/EP2001/005444
(87) Internationale Veröffentlichungsnummer: WO 2001/089883

(56) Entgegenhaltungen:
- EP-A- 0 222 193
- EP-A- 0 453 877
- EP-A- 0 810 145
- EP-A- 0 887 483
- EP-A- 1 034 920
- DE-A- 1 555 288
- DE-A- 3 313 044
- DE-A- 19 909 615
- DE-U- 29 615 757
- US-A- 5 462 331

## Beschreibung

Die Erfindung betrifft ein für die untere Abdeckung von Fahrzeug-Bodenbereichen oder -Radhäusern geeignetes mehrschichtiges Formteil mit den Merkmalen des Oberbegriffs des Patentanspruchs 1 sowie ein Verfahren zur Herstellung eines solchen Formteiles.

Formteile dieser Art werden eingesetzt, um die Karosserie vor aufgewirbelten Steinen sowie Spritzwasser zu schützen und den Lärmpegel im Fahrzeuginnenraum sowie Außenbereich zu vermindern.

Bei der Fahrt auf geschotterter Straße und auf nasser Fahrbahn werden Steine und/oder Wassertropfen durch die Reifen mitgerissen und mit hoher Geschwindigkeit gegen die Fahrzeugkarosserie geschleudert. Dadurch wird einerseits die Lackierung des Fahrzeugs im Unterbodenbereich beschädigt, so dass die Karosserie korrodieren kann. Des weiteren führt die Energieübertragung der Steine auf die Karosserie zu einer breitbandigen, impulsartigen Schwingungsanregung (Körperschall) der Karosserie, welche als Prasselgeräusch in den Innenraum des Fahrzeugs oder außerhalb davon abgestrahlt wird.

Bisher gebräuchliche Verkleidungen des Radlaufs und des Unterbodens werden typischerweise aus Kunststoffen gefertigt und dienen im wesentlichen nur dem Schutz der Karosserie vor auftreffenden Steinen. Durch den hartschaligen, massiven Aufbau wird die Vibrationsenergie beim Aufprall von Steinen oder Wassertropfen nicht in Wärme umgewandelt, sondern als Luftschall entweder direkt vom Bauteil oder nach

Körperschallübertragungen von der Karosserie abgestrahlt. Sonstiger Lärm im Unterbodenbereich, z.B. durch Rollgeräusche oder durch Emissionen vom Abgasstrang, wird von hartschaligen Verkleidungen unvermindert reflektiert.

Ein Formteil der eingangs erwähnten Art ist aus der nachveröffentlichten DE-A-199 09 615 bekannt. Zur Erzielung seiner Formstabilität dient ein selbsttragendes Metallteil, das gleichzeitig die Funktion einer schwingenden Masse hat. Die Herstellung eines Formteiles dieser Art ist u.a. wegen seiner begrenzten Verformbarkeit aufwendig und deshalb kostspielig.

Aus der gattungsbildenden EP-A-222 193 ist es bekannt, Radhäuser mehrschichtig von innen auszukleiden. Bei einer ersten Variante bildet eine auf ein Vliesmaterial genadelte Kunststofffaser ein relativ weiches, warmverformbares Bahnenmaterial, das vollflächig mit der Innenseite des Radhauses verklebt wird. Die Vorderseite kann durch eine Beschichtung aus elastischem Kunststoff wasserundurchlässig gemacht sein. Bei einer zweiten Variante ist eine stabile Trägerschicht beidseitig mit je einer Kunststofffaser-Vliesmaterial-Schicht ausgerüstet. Die mittlere Trägermaterialschicht ist derart steif gewählt, dass es als selbsttragendes Formteil durch Klemmen, Schrauben und dergleichen auch im Abstand zum Radhaus befestigt werden kann. Zur Erzielung der gewünschten Stabilität muss die Mittelschicht des Formteiles relativ hart ausgebildet sein, so dass sie zur Absorption oder Dämmung von Geräuschen nicht beiträgt.

Der vorliegenden Erfindung liegt die Aufgabe zugrunde, ein Formteil der eingangs genannten Art so zu gestalten, dass eine Optimierung sowohl seiner Stabilität als auch seiner akustischen Wirksamkeit bei gleichzeitig günstiger Herstellung erreicht werden.

Erfindungsgemäß werden diese Aufgaben durch die Merkmale der unabhängigen Patentansprüche gelöst.

Der wesentliche Vorteil des mehrlagigen Aufbaus nach der Erfindung besteht darin, dass die kinetische Energie radseitig aufprallender Projektile (Steine, Wassertropfen u.dgl.) auf ein großes federndes Volumen verteilt und bedämpft wird. Das gesamte Bauteil bewirkt bei niedrigem Gewicht eine effiziente Geräuschminderung, und zwar sowohl bei der Anregung durch Projektile, als auch beim Abrollgeräusch. Während das Außengeräusch bei relativ harten Schalen reflektiert und wieder abgestrahlt wird, kann die Schallenergie beim erfindungsgemäßen Formteil maßgeblich im Feder-Masse-System deponiert werden, das von der relativ dicken Federschicht und der bzw. den radseitigen Deckschichten gebildet wird, so dass sie darin dissipiert. Darüber hinaus erfolgt die Absorption von hochfrequentem Schall im Deckvlies und von tieffrequentem Schall im Gesamtsystem, da das Gesamtsystem einen solchen Aufbau aufweist, dass von der Karosserie selbst abgestrahlter Luftschall die fahrzeugseitige Deckschicht erreicht. Diese besteht aus dem gleichen Material wie die radseitige Deckschicht, hat also ebenfalls die Funktion einer Masse-Schicht, die an die mittlere Federschicht angrenzt. In Bezug auf die Stabilität des erfindungsgemäßen Formteiles ist von Bedeutung, dass die verschiedenen Lagen insbesondere wegen der Verpressung des Randes einen Sandwichverbund bilden, der wie ein Doppel-T-Träger wirkt. Dieser Verbund beeinträchtigt die akustischen Eigenschaften nicht.

Auch die Herstellung eines Formteiles nach der Erfindung ist gegenüber dem Stand der Technik vereinfacht. Es ist nicht mehr erforderlich, vor der Verformung des Bauteils in einem separaten Arbeitsgang eine vernadelte Doppelschicht herzustellen. Während eines einzigen Arbeitsganges kann neben der Verbindung und Verformung des Schichtaufbaues auch noch eine lokale Verpressung, z.B. im Bereich der Kanten, durchgeführt werden. Dadurch wird erreicht, dass die innere Federschicht völlig versiegelt ist, für Wasser und Schlamm zugängliche Hohlräume also nicht mehr entstehen können. Ein Delaminieren des Schichtaufbaues ist zuverlässig verhindert.

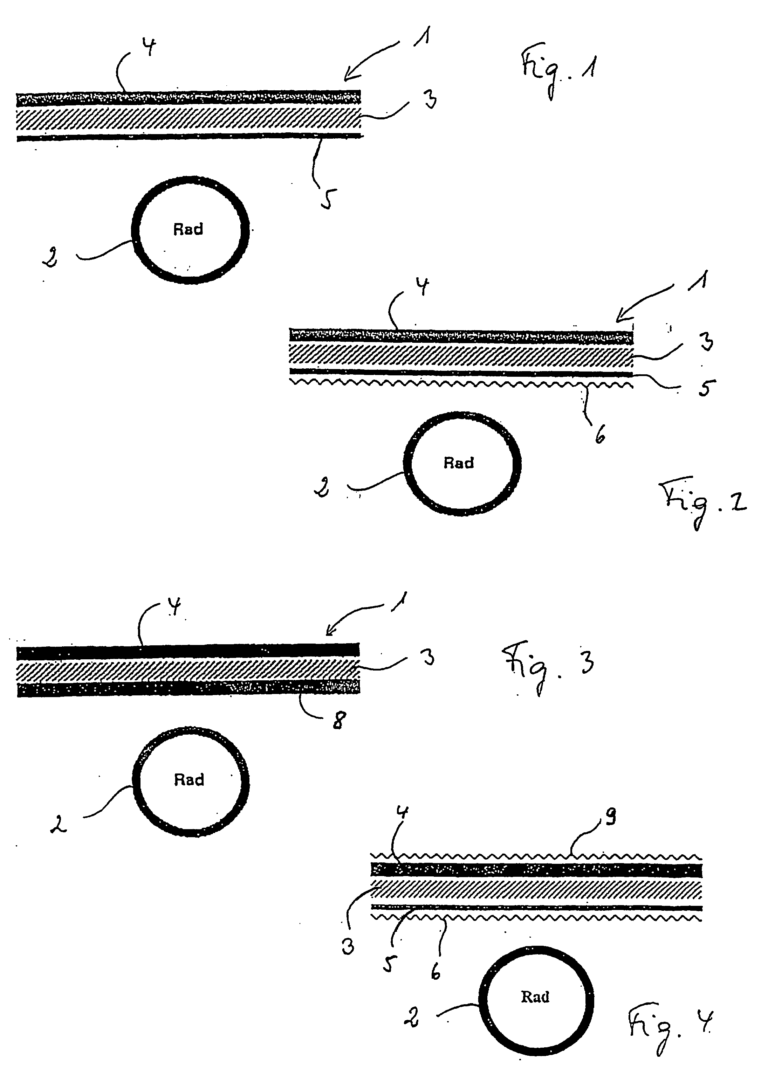

Weitere Vorteile und Einzelheiten der Erfindung sollen anhand von in den Figuren 1 bis 12 schematisch dargestellten Ausführungsbeispielen erläutert. werden.

Die Figuren 1 bis 4 zeigen Varianten des Schichtaufbaues für ein Form- bzw. Bauteil 1 nach der Erfindung. Zur Kennzeichnung der Lage ist jeweils ein Rad 2 angedeutet.

In den Figuren 1 bis 4 ist die relativ dicke, von Deckschichten 4, 5 (bzw. 8) eingeschlossene Federschicht mit 3 bezeichnet. Die jeweils fahrzeugseitige Schicht 4 ist eine ausreichend dicke (ca. 500 µ) thermoplastische oder duroplastische Deckschicht (z.B. ausPolypropylenfolie oder beharztem PES-Vlies), die nicht nur die Funktion der Versiegelung hat sondern auch mechanische Stabilität in das Bauteil 1 einbringt und als Basis für die Montage dient.

Bei der Ausführung nach Figur 1 ist radseitig die Schicht 5 vorgesehen. Es handelt sich beispielsweise um eine Folie aus Thermo- oder Duroplasten, deren wesentliche Aufgabe in der Aufnahme und Verteilung der Aufprallenergie besteht. Diese Folie ist so dünn (z.B. 100µ), dass eine Körperschallanregung durch eine makroskopische Verformung nicht stattfindet. Lokale Biegungen in der Folie werden durch die innere Federschicht 3 abgefedert und bedämpft. Des weiteren bildet diese Folie einen Schutz für die innere Schicht 3 und erhöht Formtreue sowie Stabilität des Gesamtaufbaues.

Bei der Ausführung nach Figur 2 ist die Schicht 5 radseitig abgedeckt, und zwar mit einem relativ dünnen Polyestervlies mit einem Flächengewicht in der Größenordnung von 100g/m². Diese Schicht 6 hat bereits die Wirkung, Steine, Wassertropfen etc. abzubremsen, so dass die Schicht 5 nur die noch verbleibende Aufprallenergie aufnehmen und auf die Federschicht verteilen muss. Wesentlich sind weiterhin die Absorption von hochfrequentem Schall, die Schutzwirkung der dahinter befindlichen Schicht und das verbesserte Handling des Bauteiles.

Die innere Schicht 3 mit einem Flächengewicht in der Größenordnung von 300 g/m² fungiert als Feder für die von der vorigen Lage eingebrachte Schwingung. Sie kann zur Verbesserung der Federeigenschaften genadelt sein.

Bei der Ausführung nach Figur 3 hat eine nach Art der Deckschicht 4 ausgebildete Schicht 8 die Funktion der Schichten 5, 6 nach Figur 2.

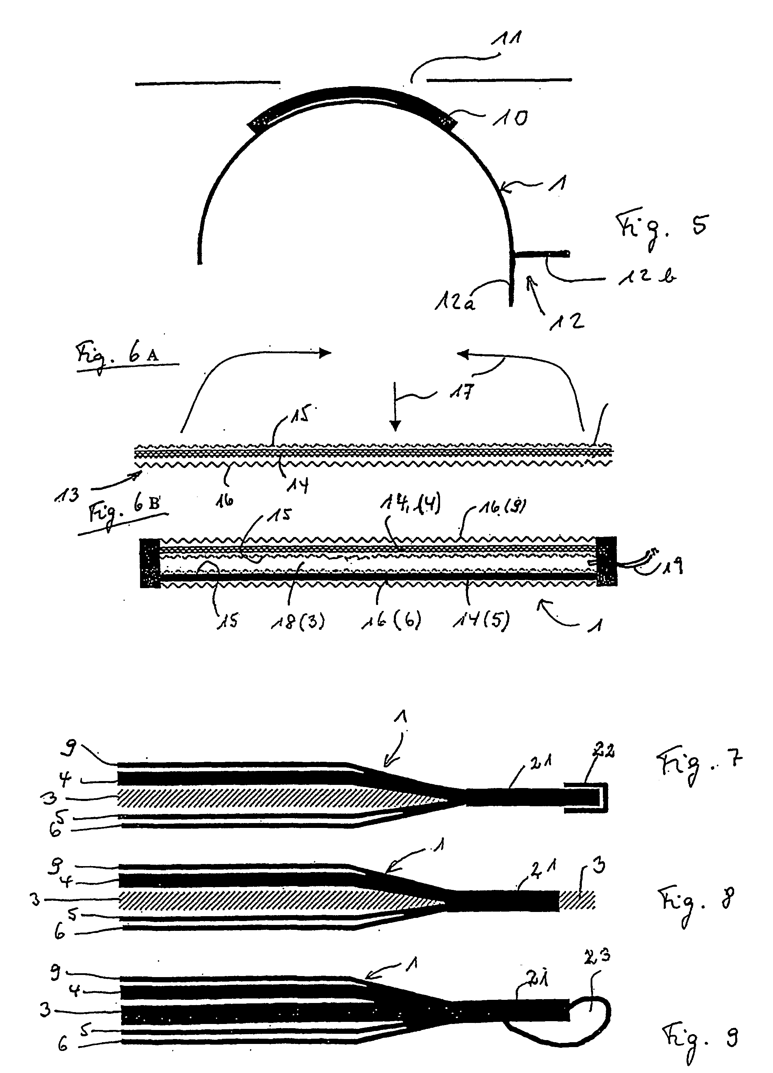

Beim Ausführungsbeispiel nach Figur 4 ist auch auf der dem Rad 2 abgewandten Seite des Bauteils 1 eine Abdeckschicht 9 vorgesehen. Zweckmäßig besteht sie aus dem gleichen Werkstoff wie die radseitige Schicht 6. Sie verbessert die hoch-frequente Absorption und hat sich für das Handling der erweichten Folie 4 als zweckmäßig erwiesen.

Bei allen Ausführungsformen nach den Figuren 1 bis 4 ist die jeweils radseitige Schicht 5 bzw. 8 so ausgebildet, dass Wasser- und/oder Schlammaufnahmen vermieden sind. Die Absorption von Luftschall erfolgt im wesentlichen durch die innere Schicht 3, die wegen der Deckschichten vor einer Wasseraufnahme geschützt ist.

Figur 5 zeigt schematisch ein für ein Radhaus bestimmtes Formteil 1 nach der Erfindung, auf dem außen ein funktionserweiterndes Element 10 aufgebracht ist. Derartige lokal aufgebrachte und lokal wirksame Schichtabschnitte 10 sind beispielsweise im Bereich von Durchbrüchen zum Motor (schematisch in Figur 5 angedeutet und mit 11 bezeichnet) oder in der Nähe der Abgasführung zweckmäßig. Beispielsweise kann ein Schwerfolienabschnitt lokal die Dämmung erhöhen, ein Folienabsorber die Absorption und eine Aluminiumfolie den Hitzeschutz verbessern. Geeignete zusätzliche Folienabschnitte können schließlich auch noch die Strapazierfähigkeit erhöhen und/oder die Reinigung vereinfachen.

Figur 5 zeigt noch, dass das Bauteil 1 mit einer T-Struktur 12 ausgerüstet ist. Es umfasst die radseitige Verlängerung 12a und den darauf senkrecht stehenden Abschnitt 12b. Weiter unten wird noch der Zweck des T-Stückes 12 beschrieben.

Als Werkstoff für die Abdeckschichten 4,5 bzw. - vliese 6, 9 können Polyester (PES), Polypropylen, Polyethylen oder Kohlefaser eingesetzt werden. Akustisch besonders wirksam ist ein Abdeckvlies mit einem Flächengewicht von ca. 50 bis ca. 200 g/m², vorzugsweise ca. 120 g/m².

Für die akustische Wirkung des Feder-Masse-Systems sind die Eigenschaften der Schichten 3 und 5 (Werkstoff, Dicke) besonders relevant. Folgende Materialien können für die Schicht 5 eingesetzt werden: Polypropylen, Polyethylen, Polyester, Polyurethan, EPDM, Kautschuk, Thermoplaste mit ähnlichen Eigenschaften - sämtlich neu oder recycelt - oder auch Mischungen der genannten Materialien. Sie haben geeignete chemische Eigenschaften und ein relativ niedriges Gewicht. Die Dicke der Schicht 5 beträgt 100 bis 500µm, vorzugsweise 150 bis 250µm.

Wie bereits erwähnt, besteht die dem Rad 2 abgewandte Deckschicht 4 aus dem gleichen Material wie die Deckschicht 5. Ihre Dicke ist größer als die Dicke der Deckschicht 5, und zwar 200 bis 1000µm, vorzugsweise 300 bis 600µm.

Die Schicht 3, die zweckmäßig gute Feder- und Absorptionseigenschaften haben soll, kann aus einem Vlies oder auch aus einem Schaum bestehen. Als Vliesmaterialien können Polyester, Polypropylen, weitere Thermoplaste mit ähnlichen Eigenschaften, Baumwolle, Zellulose, Mineralwolle oder Mischungen dieser Materialien eingesetzt werden. Das Vlies kann als Lagenvlies oder als Blasvlies ausgelegt sein. Auch die Verbindungstechnik hat Einfluss auf die gewünschten Wirkungen. Zweckmäßig ist die Verwendung eines Nadelvlieses, eines Thermobondingvlieses oder einer Mischung von beiden.

Härte und Federkraft der Schicht 3 werden vorgegeben durch
a) den Titer der eingesetzten Fasern, der das Gewicht der Einzelfaser angibt und ein Maß für die Faserdicke und somit für die Federkraft darstellt. In der Praxis werden Kombinationen unterschiedlicher Titer eingesetzt, um sowohl Flausch (Mikrofaser) als auch Rückstellkraft (borstenartig) zu erhalten.
b) Geometrie der Fasern (Kräuselung, Querschnittsverteilung)
c) Orientierung der Fasern
d) den Anteil an Bikomponenten-Fasern (BIKO), die bei thermisch gebundenen Vliesen durch Aufschmelzen der einen Komponente den Verbund innerhalb des Vlieses herstellen. Typisch ist ein BIKO-Anteil zwischen 0 und 40%, vorzugsweise 20%
e) den Titer der BIKO-Fasern, der typischerweise zwischen 1 und 20 dtex, vorzugsweise 6,6 dtex, liegt, aber im Extremfall auch bis 120 dtex oder <1 dtex betragen kann.

Das Gewicht der Vliesschichten liegt zweckmäßig zwischen 200 und 600 g/m², vorzugsweise beträgt es etwa 300 g/m².

Als Federschicht 3 einsetzbare Schaumschichten bestehen zweckmäßig aus Polyurethan, Polyethylen, EVA oder Thermo-/Duroplasten.

Schließlich kann Bestandteil der Federschicht 3 auch Gas, zweckmäßig Luft, sein. Voraussetzung für diese Lösung ist, dass die Deckschichten 4 und 5 eine abgeschlossene Tasche bilden, die die Luftschicht umschließt. Der von den Deckschichten 4 und 5 gebildete Hohlraum enthält beispielsweise als Feder eine Vlies- oder Schaumschicht und Luft. Es besteht aber auch die Möglichkeit, dass das erfindungsgemäße Bauteil 1 bei geeigneter Geometrie nur aus zwei Deckschichten 4, 5 und einer gasförmigen Federschicht 3 besteht. Wesentlich ist, dass das deckschichtbegrenzte Luftkissen die nötige Federkraft hat.

Die Eigenschaften (insbesondere Stabilität und Wirksamkeit) des erfindungsgemäßen Bauteils oder Formteils I sind abhängig von ihrem Gewicht. Das Gewicht ist deshalb dem Einsatz entsprechend zu wählen. Zweckmäßige Gewichte liegen zwischen 400 und 2000 g/m².

Ein erfindungsgemäßes Formteil kann beispielsweise aus Bahnen in einem Arbeitsgang hergestellt werden. Durch den Einsatz der relativ dicken Federschicht können die Dicke des Bauteiles 1 und damit seine lokalen mechanischen und akustischen Eigenschaften durch die Form des Werkzeuges und den Verpressungsgrad variiert werden. Beispielsweise können die Kanten des Bauteiles 1 derart verpresst werden, dass keine Hohlräume entstehen, die innere Federschicht 3 also vollständig versiegelt ist.

Die Stabilität des Bauteils wird durch den Einsatz mehrerer Lagen entscheidend erhöht, da der Sandwichverbund wie ein Doppel-T-Träger wirkt. Eine weitere Erhöhung der Stabilität kann durch den Folienabstand und eine Strukturierung des Bauteils erreicht werden. Die Optimierung von Stabilität und akustischer Wirksamkeit ist nur beim erfindungsgemäßen Formteil 1 möglich. Ein vergleichbares Serienbauteil, das dem Stand der Technik entspricht (Trilaminat) ist bei geringerer Wirksamkeit schwerer und weist durch die tragende Kunststoffschicht in der Mitte des Aufbaus eine deutlich geringere Stabilität auf. Die Dicke des mehrschichtigen Formteils nach der Erfindung variiert zwischen ca. 1mm (durchverpresst) und 10mm und liegt typischerweise zwischen 3 und 6mm.

Die Figuren 6A und 6B lassen eine weitere Variante des erfindungsgemäßen Bauteiles 1 sowie Verfahren zur Herstellung dieser Bauteile erkennen.

Figur 6A zeigt schematisch ein Halbzeug 13, das eine mittlere Schicht 14 und. zwei darauf kaschierte Abdeckschichten 15, 16 umfasst. Die mittlere Schicht 14 entspricht in Bezug auf ihre Eigenschaften den Deckschichten 4, 5 eines erfindungsgemäßen Formteiles. Die Schichten 15 und 16 entsprechen den Schichten 6, 9 eines erfindungsgemäßen Bauteiles.

Vorteilhaft bei der Fertigung von Bauteilen 1 aus derartigen Halbzeugen 13 ist das vereinfachte Handling im Vergleich mit den reinen individuellen Materialien. Eine z.B. beidseitig mit Vlies kaschierte Deckschicht lässt sich besser durch Kontakt erwärmen, ohne die Heizplatten zu verkleben, und hängt beim Erweichen nicht durch.

Mehrlagige Formteile 1 können durch Falten des Halbzeuges 13 hergestellt werden. Die Pfeile 17 in Figur 6A deuten einen Faltvorgang an, der bei der Ausführung nach Figur 6B abgeschlossen ist. Bei der in Figur 6B dargestellten Ausführungsform liegen die Schichtsysteme des Halbzeuges 13 mit Abstand übereinander und bilden einen Hohlraum 18. In diesem Hohlraum können sich eine Luftschicht (wie dargestellt), eine Vlies-/Schaumschicht oder eine Kombination von Luft- und Vlies-/Schaumschicht befinden. Diese Schichten bilden die Federschicht 3 des Bauteiles 1. Die Schicht 14 bildet die Deckschichten 4 bzw. 5. Die beiden Schichtsysteme müssen jedoch nach dem Falten nicht unbedingt einen Hohlraum bilden. Sie können aufeinander gelegt werden. Die beiden einander anliegenden und entsprechend ausgebildeten Abdeckschichten 15 bilden bei dieser Ausführung die Federschicht 3.

Schematisch angedeutet ist in Figur 6B, dass das Bauteil 1 in seinem Randbereich derart dicht verpresst ist, dass im Hohlraum 18 befindliche Luft nicht entweichen kann. Die Ausbildung des Bauteiles 1 als Luftkissen ist dadurch möglich. Zur Herstellung eines Bauteiles dieser Art sind die Abdeckschichten 15, 16 nicht unbedingt erforderlich. In diesem Fall besteht das erfindungsgemäße Bauteil nur aus einem Luftkissen, das durch die Deckschichten 4, 5 begrenzt ist. Bei der Herstellung dieser Lufttasche wird zweckmäßig das Blasform-Verfahren angewendet.

Die Verformung erfindungsgemäßer Formteile 1 erfolgt durch Anwendung von Druck und/oder Wärme. Während des Press-/Abkühlvorganges kann das federnde / absorbierende Volumen durch Aufblasen mit Luft vergrößert werden, wodurch die akustische Wirkung verbessert und eine Faltenbildung der dem Rad zugewandten Folie verhindert wird. Beim Blasform-Verfahren wird eine Pressluftdüse durch eine Aussparung in der Dichtkante des Presswerkzeuges oder ein Loch in der Deckschicht mit in die Federschicht 3 eingeführt. In Figur 6B ist eine Düse dieser Art dargestellt und mit 19 bezeichnet. Die entstehende Öffnung kann nachträglich verpresst oder auf Wunsch auch als Ablauf genutzt werden. Durch ein entsprechendes Design des Loches (Strömung, Querschnitt) ist auch eine Optimierung der Federeigenschaften des Bauteils möglich (Luftpumpen-Effekt).

Faltenwurf und Beulenbildung im Bauteil lassen sich auch durch Vorspannen des Materials verhindern. Dadurch wird aus dem Pressen teilweise ein Tiefziehen. Im Extremfall ist auch ein Vakuum-Tiefziehen möglich.

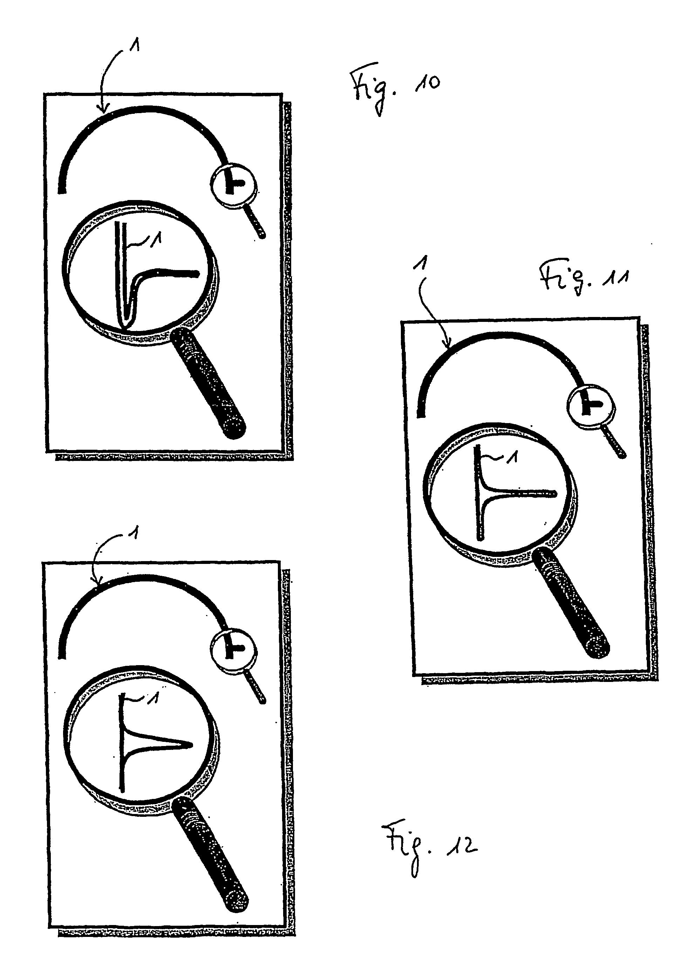

Die Ausbildung der Randbereiche erfindungsgemäßer Bauteile 1 lassen die Figuren 7, 8, 9 erkennen. Ihre Kanten 21 sind sämtlich hartverpresst. Verhindert werden muss, dass diese hartverpressten Bereiche (zur Dichtung und aus Stabilitätsgründen als Randbegrenzung erforderlich) an der Karosserie scheuern, die aufgebrachte Schutzschicht zerstören und dadurch Korrosionen des Fahrzeugs verursachen. Ein Kontakt zwischen hartverpressten Kanten 21 und der Karosserie lässt sich auf verschiedene Weise verhindern:
a) Abpolstern der Kanten durch Aufbringen einer Isolierschicht, z.B. Schaum oder Kautschuk- bzw. Harzmasse.
b) Aufbringen einer separaten Schutz- bzw. Abdeckleiste 22, z.B. aus Gummi (Kedaband), Figur 7.
c) Geschickter Beschnitt des Bauteils, so dass außerhalb des hartverpressten Randbereichs die Schichten 4, 5, 6, 9 entfernt werden und das weiter herausgeführte Vlies 3 selbst ein Polster bildet (Figur 8).
d) Luftballon-artiges Polster 23, durch Anwendung des Blasform-Verfahrens oder durch Tiefziehen.

Um Bauteile der erfindungsgemäßen Art vielseitiger verwendbar zu machen ist es zweckmäßig, diese in Randbereichen mit T-Strukturen der in Figur 5 dargestellten Art auszurüsten. Aufgaben des T-Stückes sind beispielsweise die Integration von Spoilern zur Aerodynamik oder von Schmutzfängern. Außerdem kann mit einem T-Stück die Befestigung des Bauteils durch Anbindung an den Unterboden vereinfacht werden. Bisher ließen sich solche abgeklappten Bereiche nur bei Spritzguss-Bauteilen realisieren. Textile Formteile gemäß dem Stand der Technik mussten mit separaten (zugekauften) Anbauteilen ergänzt werden.

Die Figuren 10 bis 12 zeigen, dass T-Ansätze auch bei mehrlagigen Formteilen nach der Erfindung auf verschiedene Weisen realisiert werden können:
a) Durch Umlegen und Hartverpressen des Materials (Figur 10).
b) Durch Aufklappen des Materials und Einlegen zusätzlicher Folien/Vliese in "Schwalbenschwanz-Geometrie" (Figur 11).
c) Durch "Herausziehen" der Oberfolie, wodurch insbesondere auch z.B. Kabelhalter und ähnliche Funktionen integriert werden können (Figur 12).

## Patentansprüche

1. Für die untere Abdeckung von Fahrzeug-Bodenbereichen oder - Radhäusern geeignetes mehrschichtiges Formteil (1) mit mindestens drei Schichten (3,4,5), wobei der Schichtaufbau eine von Deckschichten (4,5 oder 8) eingeschlossene Federschicht (3) umfasst, die mit der radseitigen Deckschicht (5) ein Feder-Masse-System bildet, **dadurch gekennzeichnet,**
- **dass** die radseitige Deckschicht (5) aus einem Thermoplast oder einem Material mit ähnlichen Eigenschaften besteht, ein Gewicht von 50 bis 1000g/m² und eine Dicke von 100 bis 500µm, vorzugsweise 150 bis 250µm, hat,
- **dass** die dem Rad (2) abgewandte Deckschicht (4) aus einem Thermoplast oder einem Material mit ähnlichen Eigenschaften besteht, ein Gewicht von 150 bis 1500g/m² und eine Dicke von 200 bis 1000µm, vorzugsweise 300 bis 600µm, hat und
- **dass** es insgesamt ein Flächengewicht von 400 bis 2000 g/m² hat.

2. Formteil nach Anspruch 1, **dadurch gekennzeichnet, dass** die vorzugsweise vernadelte Federschicht (3) aus Vliesmaterial besteht und ein Gewicht von 200 bis 400 g/m², hat.

3. Formteil nach Anspruch 1, **dadurch gekennzeichnet, dass** die Federschicht (3) aus Schaum besteht.

4. Formteil nach Anspruch 1, **dadurch gekennzeichnet, dass** die Federschicht (3) eine Luftschicht ist.

5. Formteil nach Anspruch 1, **dadurch gekennzeichnet, dass** Bestandteile der Federschicht (3) Vliesmaterial und/oder Schaum und/oder Luft sind.

6. Formteil nach einem der vorhergehenden Ansprüche, **dadurch gekennzeichnet, dass** die Deckschichten (4, 5) vorzugsweise beidseitig mit einer Schicht (6,9) kaschiert sind, die zweckmäßig als Vlies mit einem Flächengewicht von 50 bis 200 g/m², vorzugsweise ca. 120 g/m², ausgebildet ist.

7. Formteil nach Anspruch 6, **dadurch gekennzeichnet, dass** als radseitige Schicht eine Schicht (8), vorzugsweise aus beharztem Vlies, gewählt ist, die die Funktionen der radseitigen Schichten (5, 6) hat.

8. Formteil nach einem der vorhergehenden Ansprüche, **dadurch gekennzeichnet, dass** seine Dicke zwischen 1 und 10 mm, vorzugsweise zwischen 3 und 6 mm liegt.

9. Formteil nach einem der vorhergehenden Ansprüche, **dadurch gekennzeichnet, dass** es zusätzlich mit einem funktionserweiternden Element (10) ausgerüstet ist.

10. Formteil nach einem der vorhergehenden Ansprüche, **dadurch gekennzeichnet, dass** seine Randbereiche verpresst sind.

11. Formteil nach einem der vorhergehenden Ansprüche, **dadurch gekennzeichnet, dass** seine Kanten (21) abgepolstert sind.

12. Formteil nach einem der vorhergehenden Ansprüche, **dadurch gekennzeichnet, dass** T-förmige Strukturen (12) zur Befestigung oder zur Funktionserweiterung vorgesehen sind.

13. Formteil nach einem der vorhergehenden Ansprüche, **dadurch gekennzeichnet, dass** eine als Ablauf dienende Öffnung (19) vorgesehen ist.

14. Formteil nach Anspruch 13, **dadurch gekennzeichnet, dass** die Federschicht (3) zumindest zum Teil aus Gas besteht und dass die Öffnung (19) der Einstellung der Federeigenschaften dient.

15. Verfahren zur Herstellung eines für die untere Abdeckung von Fahrzeug-Bodenbereichen oder -Radhäusern geeigneten mehrschichtigen und stabilen Formteiles (1) mit mindestens drei Schichten, von denen zwei ein Feder- Masse-System bilden, wobei der Schichtaufbau eine von Deckschichten (4,5 oder 8) eingeschlossene Federschicht (3) umfasst, die radseitige Deckschicht (5) aus einem Thermoplast oder einem Material mit ähnlichen Eigenschaften besteht, ein Gewicht von 50 bis 1000g/m² und eine Dicke von 100 bis 500µm, vorzugsweise 150 bis 250µm, hat, die dem Rad (2) abgewandte Deckschicht (4) aus einem Thermoplast oder einem Material mit ähnlichen Eigenschaften besteht, ein Gewicht von 150 bis 1500g/m² und eine Dicke von 200 bis 1000µm, vorzugsweise 300 bis 600µm, hat, seine Randbereiche verpresst sind und das Formteil (1) insgesamt ein Flächengewicht von 400 bis 2000 g/m² hat, **dadurch gekennzeichnet, dass** es in einem Arbeitsgang aus übereinander zugeführten Bahnen hergestellt wird, indem sie in einem Werkzeug durch Wärme miteinander verbunden, verformt und lokal verpresst werden.

16. Verfahren zur Herstellung eines für die untere Abdeckung von Fahrzeug-Bodenbereichen oder -Radhäusern geeigneten mehrschichtigen und stabilen Formteiles (1) mit mindestens drei Schichten, von denen zwei ein Feder- Masse-System bilden, wobei der Schichtaufbau eine von Deckschichten (4,5 oder 8) eingeschlossene Federschicht (3) umfasst, die radseitige Deckschicht (5) aus einem Thermoplast oder einem Material mit ähnlichen Eigenschaften besteht, ein Gewicht von 50 bis 1000g/m² und eine Dicke von 100 bis 500µm, vorzugsweise 150 bis 250µm, hat, die dem Rad (2) abgewandte Deckschicht (4) aus einem Thermoplast oder einem Material mit ähnlichen Eigenschaften besteht, ein Gewicht von 150 bis 1500g/m² und eine Dicke von 200 bis 1004µm, vorzugsweise 300 bis 600µm, hat, seine Randbereiche verpresst sind und das Formteil (1) insgesamt ein Flächengewicht von 400 bis 2000 g/m² hat, **dadurch gekennzeichnet, dass** es durch Falten eines Halbzeuges (13) hergestellt wird, das von einer Schicht (14) mit den Eigenschaften der Deckschichten (4, 5) gebildet wird und dass zwischen die gefalteten Halbzeugschichten die Federschicht (3) eingebracht wird.

17. Verfahren nach Anspruch 16, **dadurch gekennzeichnet, dass** das Halbzeug (13) von einer Schicht (14) und mindestens einer Deckschicht (15, 16) mit den Eigenschaften der Abdeckschichten (6, 9) gebildet wird.

18. Verfahren nach einem der Ansprüche 15, 16 oder 17, **dadurch gekennzeichnet, dass** das Blasform-Verfahren oder das TiefziehVerfahren angewendet wird.

19. Verfahren nach einem der Ansprüche 15 bis 18, **dadurch gekennzeichnet, dass** die miteinander verpressten Kanten (21) abgepolstert werden.

20. Verfahren nach einem der vorhergehenden Ansprüche 15 bis 19, **dadurch gekennzeichnet, dass** es mit T-Strukturen (12) ausgerüstet wird.

## Claims

1. A multilayer molded element (1) that can be used for the underneath cover of vehicle floorings or wheel housings, said molded element having at least three layers (3, 4, 5) where the layers include a spring layer (3) enclosed by cover layers (4, 5 or 8), and the spring layer in conjunction with the cover layer (5) nearest to the wheel forming a spring-mass system, whereby said molded element is **characterized by**:
the cover layer (5) nearest to the wheel being composed of a thermoplastic or another material with similar characteristics having a specific weight of 50 to 1000 g/m² and a thickness of 150 to 250 µm,
the cover layer (4) furthest away from the wheel (2) being composed of a thermoplastic or another material with similar characteristics having a weight of 150 to 1500 g/m² and a thickness of 200 to 1000 µm, preferably, 300 to 600 µm, and
the overall weight per unit area not exceeding 400 to 2000 g/m².

2. Molded element in accordance with claim 1 **characterized by**:
the, preferably, needled spring layer (3) being composed of a fleece material and has a weight of 200 to 400 g/m².

3. Molded element in accordance with claim 1 **characterized by**:
the spring layer (3) being composed of a foam material.

4. Molded element in accordance with claim 1 **characterized by**:
the spring layer (3) being composed of an air layer.

5. Molded element in accordance with claim 1 **characterized by**:
the spring layer (3) being composed of fleece material and/or foam material and/or an air layer.

6. Molded element in accordance with anyone of the previous claims **characterized by**:
the cover layers (4, 5) preferably being laminated on both sides with a layer (6, 9) composed of fleece material with a weight per unit area of 50 to 200 g/m², preferably, about 120 g/m².

7. Molded element in accordance with claim 6 **characterized by**:
the layer nearest the wheel is a layer (8) composed of a resin covered fleece material performing the function of the layers (5, 6) nearest the wheel.

8. Molded element in accordance with anyone of the previous claims **characterized by**:
the thickness being between 1 and 10 mm, preferably between 3 and 6 mm.

9. Molded element in accordance with anyone of the previous claims **characterized by**:
the molded element being equipped with an element (10) expanding the function of said molded element.

10. Molded element in accordance with anyone of the previous claims **characterized by**:
said molded element having compressed regions near the edges.

11. Molded element in accordance with anyone of the previous claims **characterized by**:
said molded element having upholstered edges (21).

12. Molded element in accordance with anyone of the previous claims **characterized by**:
said molded element being equipped with T-shaped structures (12) to be used as fasteners or for expanding the function of said molded element.

13. Molded element in accordance with anyone of the previous claims **characterized by**:
said molded element being equipped with a drainage opening (19).

14. Molded element in accordance with claim 13 **characterized by**:
at least part of the spring layer (3) being composed of gas, and the opening (19) being used to adjust the spring characteristics.

15. Procedure for the manufacture of a multilayer and stable molded element (1) that can be used as underneath cover of vehicle floorings or wheel housings, said molded element having at least three layers where two of the layers form a spring-mass system and where the layers include a spring layer (3) enclosed by cover layers (4, 5 or 8), and the spring layer in conjunction with the cover layer (5) nearest to the wheel being composed of a thermoplastic or another material with similar characteristics having a specific weight of 50 to 1000 g/m² and a thickness of 100 to 500 µm, preferably 150 to 250 µm, and the cover layer (4) furthest away from the wheel (2) being composed of a thermoplastic or another material with similar characteristics having a weight of 150 to 1500 g/m² and a thickness of 200 to 1000 µm, preferably, 300 to 600 µm, and regions near the edges being compressed, and the molded element (1) having an overall weight per unit area of 400 to 2000 g/m², whereby said manufacturing procedure is **characterized by** the fact that
it can produce the molded element from superposed running lengths of the materials by performing the bonding, molding and local compressing steps with a machine tool in a single work procedure.

16. Procedure for the manufacture of a multilayer and stable molded element (1) that can be used as underneath cover of vehicle floorings or wheel housings, said molded element having at least three layers where two of the layers form a spring-mass system and where the layers include a spring layer (3) enclosed by cover layers (4, 5 or 8), and the spring layer in conjunction with the cover layer (5) nearest to the wheel being composed of a thermoplastic or another material with similar characteristics having a specific weight of 50 to 1000 g/m² and a thickness of 100 to 500 µm, preferably 150 to 250 µm, and the cover layer (4) furthest away from the wheel (2) being composed of a thermoplastic or another material with similar characteristics having a weight of 150 to 1500 g/m² and a thickness of 200 to 1000 µm, preferably, 300 to 600 µm, and regions near the edges being compressed, and the molded element (1) having an overall weight per unit area of 400 to 2000 g/m², whereby said manufacturing procedure is **characterized by** the fact that
the molded element can be manufactured by folding onto itself a product form (13) composed of a layer (14) having the characteristics of the cover layers (4, 5) and by inserting the spring layer (3) between the folded layers of the product form.

17. Manufacturing procedure in accordance with claim 16 **characterized by**:
the product form (13) being composed of one layer (14) and at least one cover layer (15, 16) having the characteristics of the outside cover layers (6, 9).

18. Manufacturing procedure in accordance with anyone of claims 15, 16 or 17 **characterized by**:
employing the blowing procedure or the deep-draw procedure.

19. Manufacturing procedure in accordance with anyone of claims 15 through 18 **characterized by** the fact that:
upholstering the compressed edges (21).

20. Manufacturing procedure in accordance with anyone of the previous claims 15 through 19 **characterized by**:
equipping the molded elements with T-formed structures (12).

## Revendications

1. Pièce façonnée multicouche (1) adaptée au revêtement inférieur des zones de plancher ou de passages de roue d'un véhicule, comprenant au moins trois couches (3, 4, 5), la structure des couches comprenant une couche élastique (3) entourée par des couches extérieures (4, 5 ou 8) et formant un système ressort-masse avec la couche extérieure (5) côté roue, **caractérisée en ce que**
- la couche extérieure (5) côté roue se compose d'une matière thermoplastique ou d'une matière présentant des caractéristiques similaires et qu'elle présente un poids compris entre 50 et 1000 g/m² et une épaisseur de 100 à 500 µm, de préférence de 150 à 250 µm,
- la couche extérieure (4) opposée à la roue (2) se compose d'une matière thermoplastique ou d'une matière présentant des caractéristiques similaires et qu'elle présente un poids compris entre 150 et 1500 g/m² et une épaisseur de 200 à 1000 µm, de préférence de 300 à 600 µm,
- elle présente un poids surfacique total compris entre 400 et 2000 g/m².

2. Pièce façonnée selon la revendication 1, **caractérisée en ce que** la couche élastique (3) de préférence épinglée est en matière non-tissée et présente un poids compris entre 200 et 400 g/m².

3. Pièce façonnée selon la revendication 1, **caractérisée en ce que** la couche élastique (3) est en mousse.

4. Pièce façonnée selon la revendication 1, **caractérisée en ce que** la couche élastique (3) est une couche d'air.

5. Pièce façonnée selon la revendication 1, **caractérisée en ce que** des composants de la couche élastique (3) sont de la matière non-tissée et/ou de la mousse et/ou de l'air.

6. Pièce façonnée selon l'une quelconque des revendications précédentes, **caractérisée en ce que** les couches extérieures (4, 5) sont cachées, de préférence des deux côtés, par une couche (6, 9) qui est conçue de manière pertinente en non-tissé avec un poids surfacique compris entre 50 et 200 g/m², de préférence environ 120 g/m².

7. Pièce façonnée selon la revendication 6, **caractérisée en ce que** l'on choisit pour la couche côté roue une couche (8), de préférence en non-tissé imprégné, qui a les fonctions des couches côté roue (5, 6).

8. Pièce façonnée selon l'une quelconque des revendications précédentes, **caractérisée en ce que** son épaisseur est comprise entre 1 et 10 mm, de préférence entre 3 et 6 mm.

9. Pièce façonnée selon l'une quelconque des revendications précédentes, **caractérisée en ce qu'**elle est dotée en complément d'un élément (10) élargissant ses fonctions.

10. Pièce façonnée selon l'une quelconque des revendications précédentes, **caractérisée en ce que** ses bords sont comprimés.

11. Pièce façonnée selon l'une quelconque des revendications précédentes, **caractérisée en ce que** ses arêtes (21) sont rembourrées.

12. Pièce façonnée selon l'une quelconque des revendications précédentes, **caractérisée en ce que** des structures en forme de T (12) sont prévues pour assurer le renfort ou l'élargissement des fonctions.

13. Pièce façonnée selon l'une quelconque des revendications précédentes, **caractérisée en ce qu'**il est prévu une ouverture (19) servant d'orifice de sortie.

14. Pièce façonnée selon la revendication 13, **caractérisée en ce que** la couche élastique (3) se compose au moins en partie de gaz et **en ce que** l'ouverture (19) sert au réglage des propriétés élastiques.

15. Procédé pour la fabrication d'une pièce façonnée multicouche (1), stable, adaptée au revêtement inférieur des zones de plancher ou de passages de roue d'un véhicule, qui comprend au moins trois couches, dont deux forment un système ressort-masse, la structure des couches comprenant une couche élastique (3) entourée par des couches extérieures (4, 5 ou 8) ; la couche extérieure (5) côté roue se composant d'une matière thermoplastique ou d'une matière présentant des caractéristiques similaires, son poids étant compris entre 50 et 1000 g/m² et son épaisseur entre 100 et 500 µm, de préférence entre 150 et 250 µm ; la couche extérieure (4) opposée à la roue (2) se composant d'une matière thermoplastique ou d'une matière présentant des caractéristiques similaires, son poids étant compris entre 150 et 1500 g/m² et son épaisseur entre 200 et 1000 µm, de préférence entre 300 et 600 µm ; ses zones de bords étant comprimées et la pièce façonnée (1) présentant un poids surfacique total compris entre 400 et 2000 g/m2, **caractérisé en ce qu'**elle est fabriquée en une opération à partir de bandes amenées les unes sur les autres, étant donné que celles-ci sont reliées par la chaleur, déformées et comprimées localement dans un outil.

16. Procédé pour la fabrication d'une pièce façonnée multicouche (1), stable, adaptée au revêtement inférieur des zones de plancher ou de passages de roue d'un véhicule, qui comprend au moins trois couches, dont deux forment un système ressort-masse, la structure des couches comprenant une couche élastique (3) entourée par des couches extérieures (4, 5 ou 8) ; la couche extérieure (5) côté roue se composant d'une matière thermoplastique ou d'une matière présentant des caractéristiques similaires, son poids étant compris entre 50 et 1000 g/m² et son épaisseur entre 100 et 500 µm, de préférence entre 150 et 250 µm ; la couche extérieure (4) opposée à la roue (2) se composant d'une matière thermoplastique ou d'une matière présentant des caractéristiques similaires, son poids étant compris entre 150 et 1500 g/m² et son épaisseur entre 200 et 1000 µm, de préférence entre 300 et 600 µm ; ses zones de bords étant comprimées et la pièce formée (1) présentant un poids surfacique total compris entre 400 et 2000 g/m², **caractérisé en ce qu'**elle est fabriquée par le repliement d'un produit semi-fini (13) qui se compose d'une couche (14) ayant les caractéristiques des couches extérieures (4, 5) et **en ce que** la couche élastique (3) est amenée entre les couches repliées du produit semi-fini.

17. Procédé selon la revendication 16, **caractérisé en ce que** le produit semi-fini (13) est conçu par une couche (14) et au moins une couche extérieure (15, 16) ayant les propriétés des couches de revêtement (6, 9).

18. Procédé selon l'une quelconque des revendication 15, 16 ou 17, **caractérisé en ce que** l'on applique le procédé de soufflage ou d'emboutissage.

19. Procédé selon l'une quelconque des revendication 15 à 18, **caractérisé en ce que** les arêtes (21) comprimées les unes avec les autres sont rembourrées.

20. Procédé selon l'une quelconque des revendication 15 à 19, **caractérisé en ce qu'**elle est dotée de structures en forme de T (12).
